# EUROPEAN PATENT APPLICATION

(11) **EP 2 325 529 A1**
(43) Date of publication of application: **25.05.2011**
(21) Application number: 09814400.9
(22) Date of filing: 24.07.2009
(51) Int. Cl.: F16J 15/08, F02F 11/00

(54) **CYLINDER HEAD GASKET**

(30) Priority: 18.09.2008 JP 2008239457
(71) Applicant: Nippon Gasket Co., Ltd., Toyota-shi Aichi 471-0838 (JP); Toyota Jidosha Kabushiki Kaisha, Toyota-shi, Aichi 471-8571 (JP)
(72) Inventor: TAKEDA Yasumaro, Toyota-shi Aichi 471-0838 (JP); FUJIKI Ryosuke, Toyota-shi Aichi 471-0838 (JP); YOSHIJIMA Kazuya, Toyota-shi Aichi 471-8571 (JP); MASUDA Yoshihiko, Toyota-shi Aichi 471-8571 (JP)
(74) Representative: Cabinet Plasseraud
(86) International application number: PCT/JP2009/063288
(87) International publication number: WO 2010/032555

(57) **Abstract**

A cylinder head gasket 1 includes at least one first seal plate 11 held between a cylinder head 2 and a cylinder block 3 having a cylinder bore 4, and the first seal plate 11 includes a combustion chamber hole 13 bored at a position of the cylinder bore 4 and a first full bead 11a surrounding the combustion chamber hole. In the first seal plate 11, a first step 11b U-shaped in section is formed at a position surrounding the combustion chamber hole outside of the first full bead 11a, and a filler 21 is charged in a recessed portion of the first step. Since the cylinder head and the cylinder block can be firmly connected via the step 11b, deformation of the cylinder block by explosion pressure of an engine can be suppressed, and thereby, reduction in sealing performance can be prevented.

## Description

### Technical Field

The present invention relates to a cylinder head gasket, and particularly relates to a cylinder head gasket including at least one first seal plate held between a cylinder head and a cylinder block having a cylinder bore.

### Background Art

As a cylinder head gasket, there is conventionally known the cylinder head gasket including at least one first seal plate held between a cylinder head and a cylinder block having a cylinder bore, wherein the first seal plate is provided with a combustion chamber hole bored at a position of the above described cylinder bore, and a first full bead surrounding the combustion chamber hole (for example, Patent Literature 1).
Further, there are also known the cylinder head gasket with a first step U-shaped in section which surrounds a combustion chamber hole being provided inside the above described first full bead (Patent Literature 2), and the cylinder head gasket in which a second seal plate is stacked and superposed on the above described first seal plate, the second seal plate is provided with a second step U-shaped in section which surrounds the combustion chamber hole and a filler is charged in the second step, and the second step is stacked and superposed on the above described first full bead (Patent Literature 3).

### Prior Art Documents

### Patent Literature

Patent Literature 1: Japanese Patent Laid-Open No. 2008-14334
Patent Literature 2: Japanese Patent Laid-Open No. 2001-295933
Patent Literature 3: Japanese Patent Laid-Open No. 2005-30557

### Summary of Invention

### Problems to be Solved by the Invention

The cylinder block of an engine is slightly elastically deformed by explosion pressure in the combustion chamber during operation of the engine. Especially in the open deck type cylinder block with a water jacket formed around a plurality of cylinder bores disposed in series and the water jacket opened to the top surface of the cylinder block, the elastic deformation at the cylinder bore side is larger than that of the above described water jacket as compared with the cylinder block which is not of an open deck type.
The elastic deformation becomes relatively large between the adjacent bores of the cylinder block, and there is the risk of occurrence of a crack in the worst case.
When the aforementioned conventionally well-known cylinder head gasket is applied to the engine with the elastic deformation around the cylinder bore being relatively large, rubbing occurs between the cylinder head gasket and the cylinder block, between the cylinder head gasket and the cylinder head, or between the stacked and superposed seal plates, due to the elastic deformation, and there arises the problem of reducing the sealing performance in these portions.
In view of such circumstances, the present invention provides a cylinder head gasket which suppresses elastic deformation of the above described cylinder block as much as possible and can keep a favorable sealing performance for a long period of time.

### Means for Solving the Problems

More specifically, the invention of claim 1 is a cylinder head gasket which includes at least one first seal plate held between a cylinder head and a cylinder block having a cylinder bore, in which the first seal plate is provided with a combustion chamber hole bored at a position of the cylinder bore and a first full bead surrounding the combustion chamber hole, wherein in the first seal plate, a first step U-shaped in section is formed at a position surrounding the combustion chamber hole outside of the first full bead, and a filler is charged in a recessed portion of the first step.

### Advantageous Effects of Invention

According to the above described configuration, the first step provided at the position surrounding the combustion chamber hole outside of the first full bead can be held by the cylinder head and the cylinder block, and the cylinder head and the cylinder block can be firmly connected via the first step.
As described at the later test result, by especially forming the step outside the full bead, deformation of the cylinder block by the explosion pressure of the engine can be effectively suppressed. Therefore, a crack of the cylinder block due to the deformation can be prevented, and occurrence of rubbing between the cylinder head gasket and the cylinder block, and between the cylinder head gasket and the cylinder head can be restrained.

### Brief Description of Drawings

[Figure 1] Figure 1 is a plane view showing a first embodiment of the present invention.
[Figure 2] Figure 2 is an enlarged sectional view along the II-II line of Figure 1.
[Figure 3] Figure 3(a) is a graph showing a test result of testing the suppression effect of elastic deformation of a cylinder block 3. Figure 3(b) is a sectional view of a cylinder head gasket corresponding to the present invention used in Figure 3 (a). Figure 3(c) is a sectional view of a cylinder head gasket corresponding to a prior art used in Figure 3(a).
[Figure 4] Figure 4 is a graph showing a test result of measuring a consumption amount of oil.
[Figure 5] Figure 5 is a sectional view showing a second embodiment of the present invention.
[Figure 6] Figure 6 is a sectional view showing a third embodiment of the present invention.
[Figure 7] Figure 7 is a sectional view showing a fourth embodiment of the present invention.
[Figure 8] Figure 8 is a plane view showing a fifth embodiment of the present invention.
[Figure 9] Figure 9 is a sectional view of an essential part showing a sixth embodiment of the present invention.
[Figure 10] Figure 10 is a sectional view of an essential part showing a seventh embodiment of the present invention.
[Figure 11] Figure 11 is a sectional view of an essential part showing an eighth embodiment of the present invention.

### Mode for Carrying Out the Invention

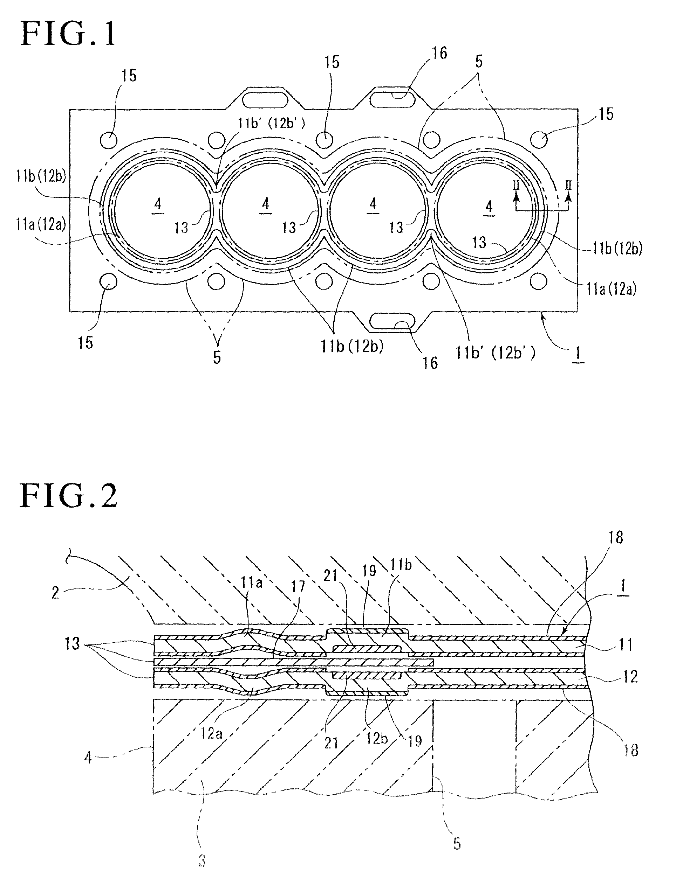

Describing the present invention about embodiments shown in the drawing hereinafter, a cylinder head gasket 1 of the present embodiment is held between a cylinder head 2 and a cylinder block 3 to seal a gap between them, in Figure 2.
The above described cylinder block 3 includes four cylinder bores 4 disposed in series on a straight line in the embodiment shown in Figure 1, water jackets 5 are formed around the respective cylinder bores 4 so as to surround them, and the water jackets 5 are opened to a top surface of the cylinder block 3.

As shown in Figure 2, the above described cylinder head gasket 1 includes a first seal plate 11 of a metal disposed at a side of the cylinder head 2, and a second seal plate 12 of a metal disposed at a side of the cylinder block 3, and in each of the seal plates 11 and 12, four combustion chamber holes 13 which are bored to correspond to the cylinder bores 4 of the above described cylinder block 3 are formed.
Further, as shown in Figure 1, a plurality of bolt holes 15 for inserting fastening bolts not illustrated therethrough, and blowby holes 16 for passing blowby gas therethrough are bored in each of the seal plates 11 and 12.

Further, as shown in Figure 2, shim plates 17 made of a metal each in a ring shape which increase surface pressure of the peripheries of the combustion chamber holes 13 are provided between the above described first seal plate 11 and second seal plate 12, and the shim plate 17 is disposed for each of the cylinder bores 4.
The ring-shaped shim plate 17 which is disposed for each of the above described cylinder bores 4 is integrally connected to each other at an intermediate position of each of the cylinder bores 4, and thereby, assembly easiness is enhanced. However, the shim plates 17 may be made to be separate bodies respectively,

In the above described first seal plate 11 and second seal plate 12, full beads 11a and 12a are respectively formed in the range superposed on the ring-shaped shim plate 17, and the first full bead 11a formed in the upper first seal plate 11 which is caused to abut on the cylinder head 2 is formed to project toward the cylinder head 2.
Meanwhile, the second full bead 12a formed in the second seal plate 12 is formed to project toward the cylinder block 3, and therefore, both the full beads 11a and 12a are stacked and superposed to project in the directions to separate from each other. The respective full beads 11a and 12a surround the respective combustion chamber holes 13 in an endless form.

Further, in the above described first seal plate 11 and second seal plate 12, steps 11b and 12b each U-shaped in section are formed outside the respective full beads 11a and 12a inside the water jacket 5. In this case, the respective steps 11b and 12b are formed in the range superposed on the ring-shaped shim plate 17. In other words, the shim plate 17 extends from the above described combustion chamber hole 13, passes through a space between both the full beads 11a and 12a to the position slightly beyond the space between both the steps 11b and 12b.
The first step 11b formed in the above described first seal plate 11 is formed to project towards the cylinder head 2, and the second step 12b formed in the second seal plate 12 is formed to project towards the cylinder block 3. Accordingly, both the above described steps 11b and 12b project in the direction to separate from each other in the superposed state.
Further, the first steps 11b formed in the above described first seal plate 11 are connected at the positions in the vicinities of the spaces between the adjacent cylinder bores 4 and commonly surround the four combustion chamber holes 13 in an endless form, and the second steps 12b formed in the second seal plate 12 also commonly surround the four combustion chamber holes 13 in an endless form.

In recessed portions of the above described respective steps 11b and 12b, a filler 21 such as a synthetic resin is charged respectively, and by filling the filler 21, the rigidity of each of the steps 11b and 12b is enhanced to prevent excessive buckling deformation and a permanent strain due to a load, and durability of each of the steps 11b and 12b is enhanced.
At this time, the above described filler 21 may be charged to fill all the recessed portions of the respective steps 11b and 12b, but is preferably charged to fill about 80 to 95% with respect to the volume of the recessed portion of each of the steps 11b and 12b. The filler 21 is charged to the range of about 80 to 95% like this, and thereby, when the cylinder head gasket 1 is incorporated in the engine and the respective steps 11b and 12b are crushed, the surface pressure in the portions can be favorably prevented from being more excessive than expected.

Further, in the present embodiment, the heights of the above described respective steps 11b and 12b are made to differ from each other in the circumferential direction. More specifically, the heights of the above described respective steps 11b and 12b are set to be higher than the other portions in portions 11b' and 12b' in the vicinities of the spaces between the adjacent bores 4 and 4.
As described above, the elastic deformation of the cylinder block 3 becomes relatively large in the space between the adjacent bores 4 and 4, and therefore, by making the surface pressure of the portions 11b' and 12b' higher than the other portions, elastic deformation can be effectively suppressed.
As above, the heights of the above described respective steps 11b and 12b can be set to be high at the position with a large elastic deformation amount, and are set to be low at the position with a small elastic deformation amount in consideration of the elastic deformation amount at each of the positions of the cylinder block 3, and by setting the surface pressure at each of the positions of the cylinder block 3 to be optimal pressure by this, the elastic deformation of the cylinder block 3 can be effectively suppressed while impression is prevented from being formed by excessive surface pressure.
The heights of the respective steps 11b and 12b may be set as constant in the cylinder block with less elastic deformation and the cylinder block having elastic deformation which is uniform in each of the portions, as a matter of course.

Further, respective surfaces of the above described first seal plate 11 and second seal plate 12 are coated with a coating material 18 such as a material of a rubber or an elastomer of fluorine, nitrile or the like.
The above described coating material 18 is provided for the purpose of enhancing adhesion to the counterpart member and sealing performance, and if additionally necessary in order to ensure slidability and non-adhesiveness, a top coat such as graphite or wax may be applied onto the surface of the above described coating material 18.
In the present embodiment, on the surfaces of the projected side of the respective steps 11b and 12b, the above described coating material 18 is omitted so that the top surface of the step 11b directly abuts on the cylinder head 2, and an undersurface of the step 12b directly abuts on the cylinder block 3. Thereby, as compared with the case of coating the abutment surfaces with the coating material 18, the friction coefficient is increased, and slip between each of the steps 11b and 12b and the cylinder head 2 or the cylinder block 3 is suppressed, whereby the elastic deformation of the cylinder block 3 can be reduced.
Form the similar viewpoint, a coat material 19 with a high friction coefficient with a phenol resin, an epoxy resin or the like of polyimide or polyamide-imide used as a base may be provided on the surface of the respective projection sides of the above described respective steps 11b and 12b so that slip between each of the steps 11b and 12b and the cylinder head 2 or the cylinder block 3 may be more effectively suppressed.

In the above configuration, when the cylinder head gasket 1 is held between the cylinder head 2 and the cylinder block 3, the cylinder head 2 and the cylinder block 3 are firmly connected via the above described steps 11b and 12b in the position inside the water jackets 5. Thereby, the cylinder block 3 which is inside the water jacket 5 can be especially suppressed from being curved outward in the radius direction of the bore 4 by the explosion pressure at the side of the cylinder bore 4. If the local deformation of the cylinder block 3 can be effectively suppressed, rubbing between the cylinder block 3 and the seal plate 12, which occurs due to the local deformation, and rubbing between the cylinder head 2 and the seal plate 11 can be suppressed, and reduction in sealing performance which occurs due to the rubbing can be prevented.

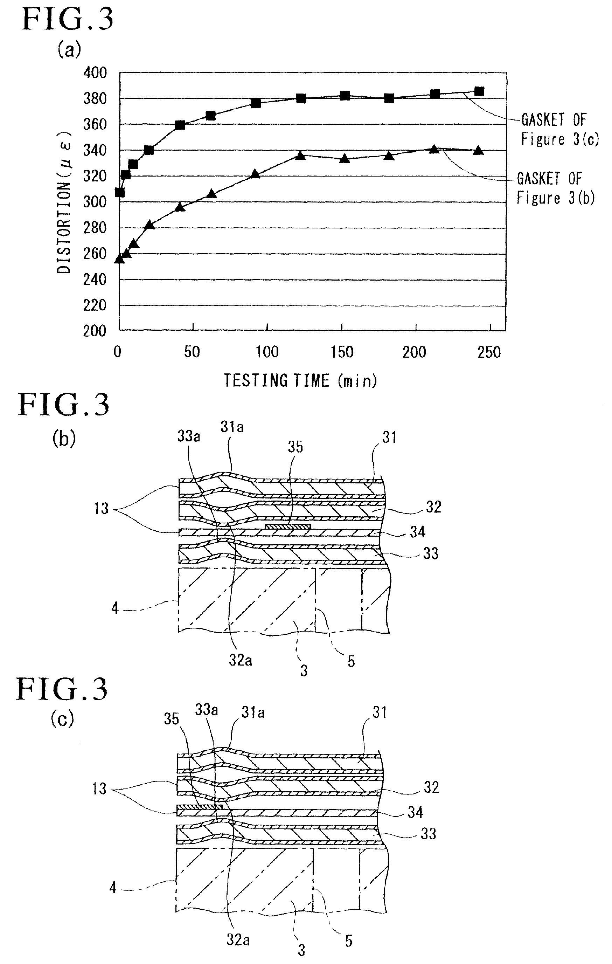

Incidentally, Figure 3a shows the test result of testing the effect of suppression of the elastic deformation of the cylinder block 3 for the case of enhancing the surface pressure at the position in the vicinity of the combustion chamber hole 13, and the case of enhancing the surface pressure at the position away from the combustion chamber hole 13 and close to the inner peripheral edge of the water jacket 5, in the cylinder block 3 including the water jackets 5.
Figure 3b and Figure 3c disclose the sectional views of the cylinder head gasket used in the above described test. Each of the cylinder head gaskets includes the same configuration, and includes three seal plates 31, 32 and 33 made of a metal and stacked on one another, and one thickness adjusting plate 34 interposed among these seal plates. The two seal plates 31 and 32 are stacked at the side of the cylinder head 2, of the thickness adjusting plate 34, whereas the other seal plate 33 is disposed at the side of the cylinder block 3 from the thickness adjusting plate 34.

In the respective seal plates 31 to 33, full beads 31a to 33a are formed at the position where the respective seal plates 31 to 33 surround the combustion chamber hole 13 and are superposed on one another, and the full bead 31a of the seal plate 31 at the side closest to the cylinder head 2 is projected toward the cylinder head 2, and the full bead 32a of the seal plate 32 which is stacked on the seal plate 31 to be at the side of the thickness adjusting plate 34 is projected toward the thickness adjusting plate 34. Further, the full bead 33a of the seal plate 33 at the side of the cylinder block 3 is projected toward the thickness adjusting plate 34.
In the case shown in Figure 3b, a ring-shaped shim 35 corresponding to the steps 11b and 12b in the above described embodiment is disposed at the position away from the combustion chamber hole 13 and close to the inner peripheral edge of the water jacket 5, and by the shim 35, the surface pressure at the position away from the combustion chamber hole 13 and close to the inner peripheral edge of the water jacket 5 can be enhanced.
Meanwhile, in the case shown in Figure 3c, the above described shim 35 is disposed at the position close to the combustion chamber hole 13 so as to be able to enhance the surface pressure of the portion.

Figure 3a is the result of measuring the distortion of the inner peripheral edge portion of the water jacket 5 in the cylinder block 3, the line connected with the black triangles of Figure 3a shows the result of Figure 3b, whereas the line connected with the black squares shows the result of Figure 3c, respectively.
As is understood from the above described results, the distortion in the inner peripheral edge of the above described water jacket 5 can be reduced more when the surface pressure of the portion close to the inner peripheral edge of the water jacket 5 and away from the combustion chamber hole 13 is enhanced to lock the portion than when the surface pressure at the position close to the combustion chamber hole 13 is enhanced to lock the portion.
The reason is considered to be as follows.
More specifically, when the shim 35 is disposed at the position close to the combustion chamber hole 13, and thereby, the surface pressure of that portion is enhanced, the portion is distorted (elastically deforms) towards the combustion chamber hole 13, and therefore, a reaction force in the direction to be away from the combustion chamber hole 13 acts on the portion in order to eliminate the distortion. It is conceivable that the explosion pressure in the cylinder bore 4 when the engine is actuated acts in the direction to eliminate the above described distortion, and therefore, the explosion pressure and the reaction force to eliminate the distortion act on the position close to the above described combustion chamber hole 13 in the same direction, as a result of which, the distortion in the inner peripheral edge of the above described water jacket 5 becomes large.
Meanwhile, when the shim 35 is disposed at the position away from the combustion chamber hole 13 and close to the inner peripheral edge of the water jacket 5, and the surface pressure of the portion is enhanced, the portion close to the combustion chamber hole 13 is distorted in the direction to be away from the combustion chamber hole 13, and the reaction force in the direction toward the combustion chamber hole 13 acts on the portion to eliminate the distortion. It is conceivable that since the explosion pressure in the cylinder bore 4 when the engine is actuated acts in the direction opposite from the reaction force in the direction to eliminate the above described distortion in this case, the influence of the explosion pressure is weakened by the action force in the direction to eliminate the distortion, and the distortion in the inner peripheral edge of the above described water jacket 5 is considered to be small.

As is understood from the above described test results, more excellent suppression effect of elastic deformation can be obtained when the respective steps 11b and 12b in the above described embodiments are formed at the position outside the respective full beads 11a and 12a and close to the inner peripheral edge of the water jacket 5 as shown in the above described embodiment than when the respective steps 11b and 12b are formed inside the respective full beads 11a and 12a and near the combustion chamber hole 13.

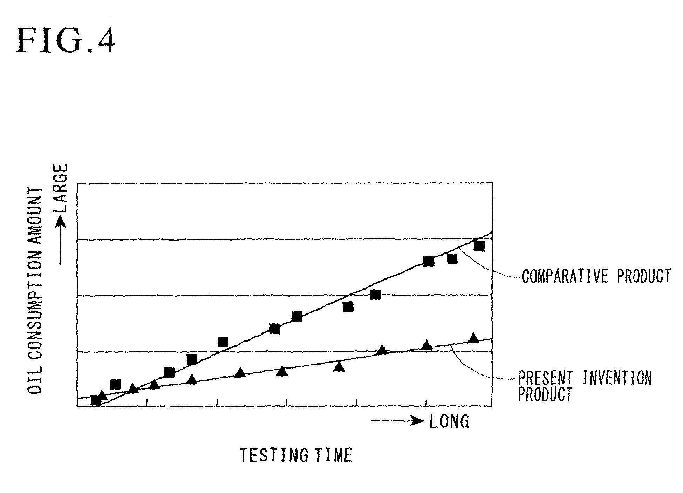

Further, Figure 4 shows the result of measuring the consumption amounts of oil by incorporating the cylinder head gasket 1 as the product of the present invention having the configuration as shown in the above described Figure 2, and the cylinder head gasket as a comparative product formed by omitting the steps 11b and 12b from the cylinder head gasket 1 and forming the portions to be flat into the same engine, respectively.
In Figure 4, the line connected with the black triangles shows the result of using the cylinder head gasket of the product of the present invention, and the line connected with the black squares shows the result of using the cylinder head gasket of the comparative product, respectively.
As is understood from the test result of Figure 4, the oil consumption amount is reduced more in the product of the present invention including the steps 11b and 12b than the comparative product which does not include the steps 11b and 12b.
More specifically, in the comparative product, when the cylinder block locally deforms by the explosion pressure of the engine and the circularity of the cylinder bore is reduced, variation occurs to the surface pressure of the piston ring when sliding on the bore inner surface, and the oil scraping ability for the bore surface is reduced at the locations with low surface pressure, which becomes the factor of increasing the oil consumption amount.
In contrast with this, in the product of the present invention, the steps 11b and 12b effectively suppress local deformation of the cylinder block, and therefore, occurrence of variation to the surface pressure of the piston ring can be suppressed, whereby reduction in the ability of scraping oil by the piston ring is prevented, and the oil consumption amount can be reduced.

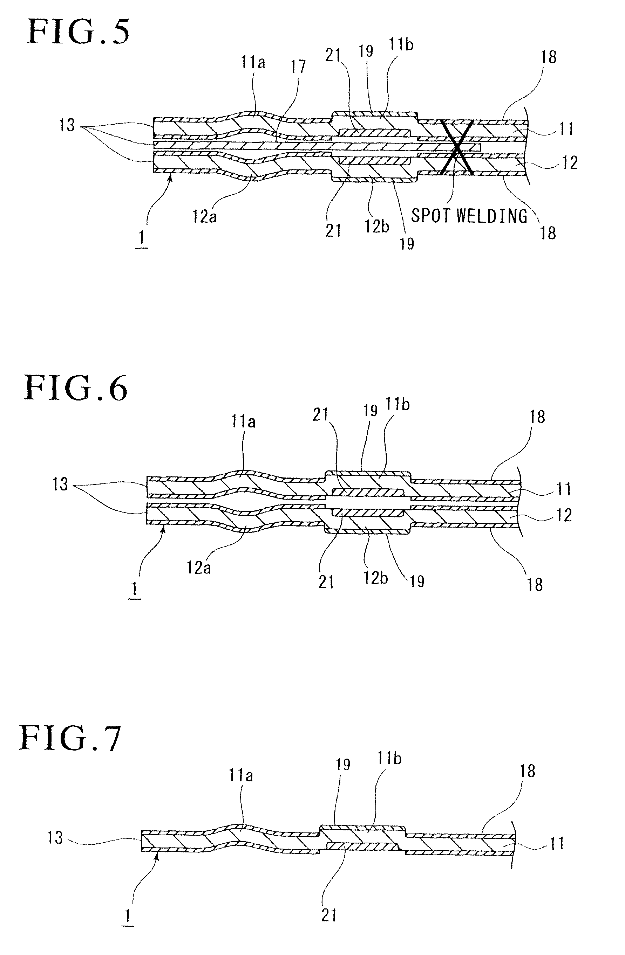

Figure 5 shows a second embodiment of the present invention, and in the present embodiment, in the cylinder head gasket 1 of the same configuration as the above described first embodiment, the above described seal plates 11 and 12 and the shim plate 17 are integrally connected with each other by spot welding in the position outside the above described respective steps 11b and 12b.
By applying spot welding like this, the above described plates 11, 12 and 17 can be integrally connected, and thereby, rubbing among them can be reliably prevented.
Instead of the above described spot welding, the respective plates 11, 12 and 17 may be integrally connected by using an adhesive of polyimide, an anorganic substance or the like having heat resistance.

Figure 6 shows a third embodiment of the present invention, and in the present embodiment, the shim plate 17 of the above described first embodiment is omitted, and simplification is realized.
The other components are configured as in the first embodiment, and the same and corresponding components are shown by being assigned with the same reference signs.

Figure 7 shows a fourth embodiment of the present invention, and in the present embodiment, the one seal plate 12 is omitted from the above described third embodiment, and further simplification is realized. The other seal plate 11 may be omitted.
In the above described third embodiment and fourth embodiment, the cylinder head 2 and the cylinder block 3 may be firmly connected via the step in the position inside the water jacket 5, and therefore, elastic deformation of the cylinder block 3 can be suppressed.

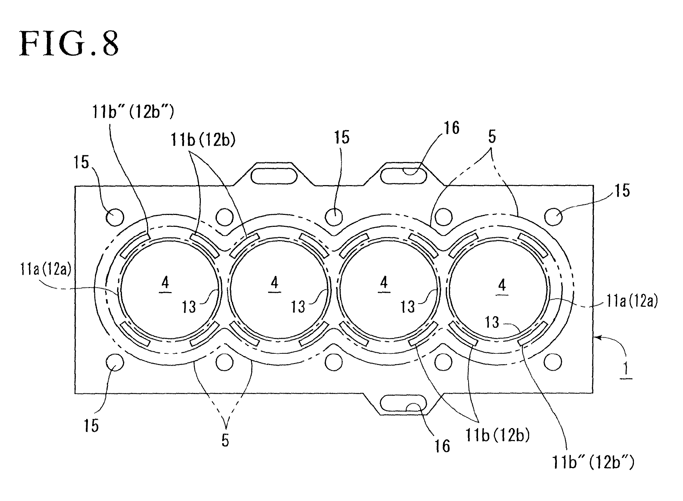

Figure 8 shows a fifth embodiment of the present invention, and in the first embodiment, the respective steps 11b and 12b are formed into an endless shape to surround the four combustion chamber holes 13 in common, but in the present embodiment, the steps 11b and 12b are partially formed by considering the position at which elastic deformation becomes large.
In the present embodiment, the elastic deformation of the cylinder block 3 becomes relatively large between the adjacent bores 4 and 4 as described above, and therefore, in order to suppress the elastic deformation, the steps 11b and 12b are formed in a plurality of locations close to the adjacent bores 4 and 4, and steps 11b" and 12b" are also formed at the outside positions which are at both sides in the series direction of the four cylinder bores 4 which are disposed in series on one straight line.
The other components are configured similarly to those of the first embodiment, and the same and the corresponding parts are shown by being assigned with the same reference signs.
In such a configuration, the elastic deformation of the cylinder block 3 can be favorably suppressed.
In the second to the fourth embodiments, the steps 11b and 12b may be partially formed as in the fifth embodiment as a matter of course.

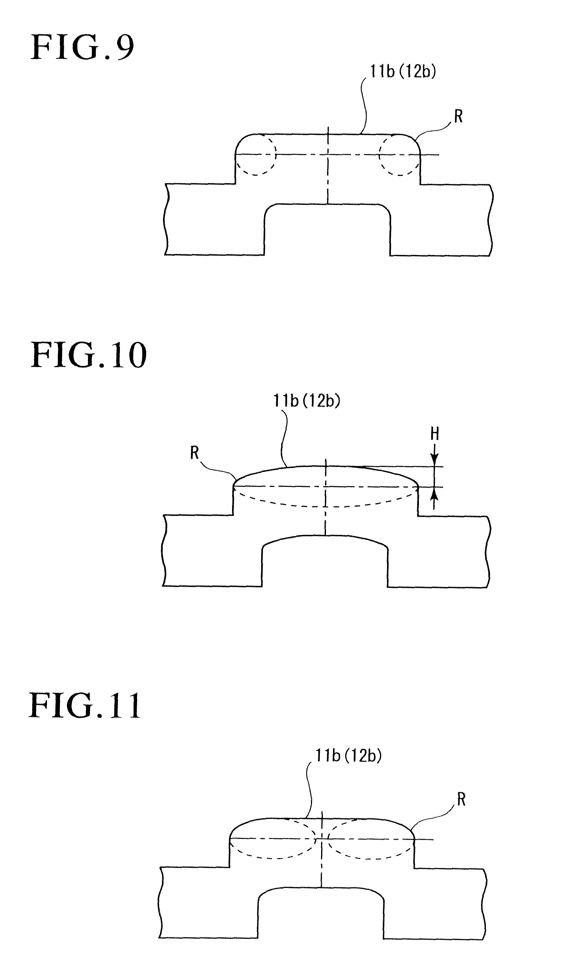

Figure 9 shows a sixth embodiment of the present invention, and in the present embodiment, arc portions R are formed at corner portions of contact surfaces in contact with the cylinder head 2 in the above described steps 11b and 12b, and corner portions of contact surfaces in contact with the cylinder block 3. In the present embodiment, the arc portions R are formed at only the corner portions of the above described contact surfaces, and the other contact surfaces are formed to be flat, but the present invention is not limited to this.
More specifically, Figure 10 shows a seventh embodiment of the present invention, and in the present embodiment, the contact surface is formed to be elliptical in section so that a central portion in a radial direction of the combustion chamber hole 14 in the above described contact surface slightly projects. At the corner portions of the above described contact surface, the arc portions R in accordance with the elliptical shape are continuously formed. A height H of the central portion of the above described elliptical portion is desirably about 10 to 50 µm.
Further, Figure 11 shows an eighth embodiment of the present invention. In the present embodiment, at the corner portions of the above described contact surface, the arc portions R elliptical in section are formed, and the contact surface between both the arc portions R is formed to be flat.

When the arc portions R are not formed at the corner portions of the above described contact surface, there is the risk that the corner portions are firmly brought into close contact with the cylinder head 2 and the cylinder block 3 to form impressions along the corner portions on the cylinder head 2 and the cylinder block 3, but formation of the arc portions R as described above at the corner portions can reduce the risk.
The arc portions R shown in Figure 9 to Figure 11 can be applied to the corner portions of all the steps in the aforementioned first embodiment to fifth embodiment, but may be applied to only the step which is in contact with any one of the cylinder head 2 and the cylinder block 3 in accordance with the materials of the cylinder head 2 and the cylinder block 3.

### Reference Signs List

- 1: CYLINDER HEAD GASKET
- 2: CYLINDER HEAD
- 3: CYLINDER BLOCK
- 4: CYLINDER BORE
- 5: WATER JACKET
- 11, 12: SEAL PLATE
- 11a, 12a: FULL BEAD
- 11b, 12b: STEP
- 13: COMBUSTION CHAMBER HOLE
- 17: SHIM PLATE
- 21: FILLER
- R: ARC PORTION

## Claims

1. A cylinder head gasket which includes at least one first seal plate held between a cylinder head and a cylinder block having a cylinder bore, in which the first seal plate is provided with a combustion chamber hole bored at a position of the cylinder bore and a first full bead surrounding the combustion chamber hole,
wherein in the first seal plate, a first step U-shaped in section is formed at a position surrounding the combustion chamber hole outside of the first full bead, and a filler is charged in a recessed portion of the first step.

2. The cylinder head gasket according to claim 1,
wherein a second seal plate is stacked and superposed on the above described first seal plate, the second seal plate is provided with a combustion chamber hole bored at the position of the cylinder bore, a second full bead surrounding the combustion chamber hole, and a second step U-shaped in section which is formed at a position surrounding the combustion chamber hole outside of the second full bead, and a filler is charged in a recessed portion of the second step, and
the first full bead and the second full bead, and the first step and the second step are further stacked and superposed on each other and project in directions to be away from each other.

3. The cylinder head gasket according to claim 2,
wherein a shim plate which increases surface pressure around the combustion chamber hole is interposed between the first seal plate and the second seal plate, and the shim plate extends from the combustion chamber hole to a position beyond a space between the first full bead and the second full bead and a space between the first step and the second step.

4. The cylinder head gasket according to claim 3,
wherein the first seal plate, the second seal plate and the shim plate are integrally connected to one another at a position beyond the space between the first step and the second step.

5. The cylinder head gasket according to any one of claims 1 to 4,
wherein the steps are each formed into an endless shape, surrounding the cylinder bore.

6. The cylinder head gasket according to any one of claims 1 to 4,
wherein the steps are each partially formed at a required position surrounding the cylinder bore.

7. The cylinder head gasket according to any one of claims 1 to 6,
wherein heights of the steps are each formed to be high in a vicinity of a space between adjacent cylinder bores and to be low at the other positions.

8. The cylinder head gasket according to any one of claims 1 to 7,
wherein the filler is charged to fill 80 to 95% of a capacity of the recessed portion.

9. The cylinder head gasket according to any one of claims 1 to 8,
wherein surfaces at projected sides of the steps are provided with a coat material with a high frictional coefficient with a phenol resin or an epoxy resin or polyimide or polyamide-imide, or the like as a base material.

10. The cylinder head gasket according to any one of claims 1 to 9,
wherein surfaces of the seal plates are coated with a coating material such as a material of a rubber or an elastomer of fluorine, nitrile or the like, and the coating material is omitted at portions where the steps are formed.

11. The cylinder head gasket according to any one of claims 1 to 10,
wherein an arc portion is formed on at least any one of a corner portion of a contact surface in contact with the cylinder head and a corner portion of a contact surface in contact with the cylinder block in the steps.
